# DEMANDE DE BREVET EUROPEEN

(11) **EP 4 538 586 A1**
(43) Date de publication de la demande: **16.04.2025**
(21) Numéro de dépôt: 24204592.0
(22) Date de dépôt: 04.10.2024
(51) Int. Cl.: F17C 13/00, F16C 29/02, F16C 33/08, F16C 33/20

(54) **TOUR DE CHARGEMENT ET/OU DE DÉCHARGEMENT DE FLUIDE CRYOGÉNIQUE**

(30) Priorité: 09.10.2023 FR 2310795
(71) Demandeur: GAZTRANSPORT ET TECHNIGAZ, 78470 Saint-Rémy-lès-Chevreuse (FR)
(72) Inventeur: LEVEILLARD, Jean-Louis, 78470 Saint-Rémy lès Chevreuses (FR)
(74) Mandataire: Ex Materia

(57) **Abrégé**

La présente invention concerne une tour de chargement et/ou de déchargement (6) de fluide cryogénique dans une cuve de stockage (1), comprenant au moins un dispositif de guidage (16) destiné à permettre le positionnement de ladite tour par rapport à une base (4) solidaire d'une paroi de fond (2) de la cuve, le dispositif de guidage comprenant un support (24) comportant un rebord (46) et une zone de réception (54) d'un tampon (26), le dispositif de guidage (16) comprenant un organe de maintien (58) du tampon délimitant avec le rebord (46) la zone de réception, l'organe de maintien (58) étant destiné à s'étendre au moins en partie dans une ouverture d'insertion du tampon, la tour (6) comprenant une pluralité de mâts (12) et une embase (14) reliant les mâts entre eux, le dispositif de guidage (16) étant solidaire de l'embase et configuré pour venir au contact de la base (4).

## Description

La présente invention concerne le domaine des fluides cryogéniques tels que le gaz naturel liquéfié, le gaz de pétrole liquéfié, l'éthane, l'ammoniac ou encore l'hydrogène, et plus particulièrement les problématiques liées à leur chargement et à leur déchargement résultant de leur transport.

À titre d'exemple, le gaz naturel liquéfié ou GNL, également connu sous l'acronyme anglophone LNG pour liquefied natural gas, est une source d'énergie importante qui se compose principalement de méthane. Le gaz naturel liquéfié est généralement stocké à l'état liquide à une température proche de -160 °C, le gaz naturel liquéfié occupant alors 1/600ème du volume qu'il occuperait à l'état gazeux. Cela permet de faciliter le transport de ce gaz naturel liquéfié entre un site d'extraction et un site de destination. En vue de son transport et au cours de celui-ci, le gaz naturel liquéfié est stocké dans des cuves étanches et isolantes thermiquement. De telles cuves peuvent être installées à terre ou sur un ouvrage flottant.

Afin de charger et décharger les cuves dans lesquelles est stocké le gaz naturel liquéfié, des tours de chargement et/ou de déchargement sont installées en leur sein. Les tours de chargement et/ou de déchargement peuvent être des dispositifs mobiles, mais dans le cas de cuves de méthaniers celles-ci sont généralement fixées directement à la cuve. La cuve comprend alors une ouverture supérieure configurée pour recevoir la tour de chargement et/ou de déchargement, cette dernière présentant plusieurs mâts s'étendant sur toute une hauteur de la cuve. Sur le fond de la cuve est fixée une base sur laquelle la tour de chargement et/ou de déchargement vient se positionner pour permettre le chargement et le déchargement du gaz naturel liquéfié.

Lors du chargement et du déchargement de la cuve, des variations de température importantes dues au passage de la température de conservation du méthane à l'état liquide à la température ambiante peuvent altérer les matériaux utilisés dans la tour de chargement et/ou de déchargement. On comprend par altération des matériaux que ceux-ci peuvent se dilater ou rétrécir suivant les variations de températures. Il est alors nécessaire que la tour de chargement et/ou de déchargement soit mobile en translation verticale sur la base pour s'adapter aux altérations des matériaux, une telle translation verticale s'entendant sensiblement perpendiculairement au fond de la cuve.

Il est connu d'utiliser des tampons ou patins qui autorisent une mobilité en translation verticale de la tour de chargement et/ou de déchargement tout en restreignant ses déplacements dans des plans parallèles au fond de la cuve. De tels tampons sont portés par des supports de tampons, qui sont fixés sous la tour et sont positionnés en regard de la base afin de glisser le long de cette dernière. L'installation des supports de tampons sur la tour de chargement et/ou de déchargement d'une part et le montage des tampons sur les supports de tampons d'autre part sont cependant compliqués à mettre en oeuvre au sein de la cuve de stockage, notamment car l'espace de travail y est restreint et que les supports de tampons sont des pièces lourdes et encombrantes.

La présente invention vise à pallier cet inconvénient en proposant un support de tampon dont la configuration facilite l'installation sur une tour de chargement et/ou de déchargement, une telle installation pouvant être faite préalablement à une descente de la tour de chargement et/ou de déchargement au sein de la cuve de stockage de gaz naturel liquéfié de sorte que seule l'étape de montage du tampon sur le support de tampon soit réalisée dans la cuve de stockage.

La présente invention a ainsi pour principal objet un dispositif de guidage destiné à permettre le positionnement d'une tour de chargement et/ou de déchargement de fluide cryogénique par rapport à une base solidaire d'une paroi de fond d'une cuve de stockage de fluide cryogénique, le dispositif de guidage comprenant un support, configuré pour être solidaire de la tour de chargement et/ou de déchargement comportant un rebord et une zone de réception d'un tampon, le rebord présentant une ouverture configurée pour insérer le tampon dans la zone de réception, le dispositif de guidage comprenant un organe de maintien du tampon délimitant avec le rebord la zone de réception, l'organe de maintien étant destiné à s'étendre au moins en partie dans l'ouverture.

Le dispositif de guidage selon l'invention est un dispositif porteur de tampon. Il constitue une interface entre une tour de chargement et/ou de déchargement de fluide cryogénique tel que du gaz naturel liquéfié ou GNL d'une part et une base d'une cuve de stockage d'autre part, la base étant plus particulièrement destinée à être positionnée en regard d'une embase de la tour de chargement et/ou de déchargement. Le dispositif de guidage participe à l'installation de la tour de chargement et/ou de déchargement par rapport à la base.

Le dispositif de guidage comprend un support avec une zone de réception du tampon, au sein de laquelle ce tampon est destiné à être logé. La zone de réception du tampon est au moins partiellement entourée par un rebord, qui constitue un encadrement de cette zone de réception. Le rebord n'est pas continu sur tout un pourtour du support ; il présente une ouverture par laquelle le tampon est inséré jusqu'à la zone de réception. Afin de délimiter de façon continue la zone de réception sur tout le pourtour du support une fois le tampon positionné, le dispositif de guidage présente un organe de maintien destiné à être positionné dans l'ouverture du rebord.

L'organe de maintien est positionné dans l'ouverture une fois le tampon mis en place dans la zone de réception. Il est ainsi possible de dissocier l'opération d'assemblage du dispositif de support de tampon à la tour de chargement et/ou de déchargement d'une part et l'opération de montage du tampon au sein de ce dispositif de support de tampon d'autre part ; en d'autres termes, l'opération d'assemblage du dispositif de support de tampon à la tour de chargement et/ou de déchargement et l'opération de montage du tampon au sein du dispositif de support de tampon sont réalisées en deux temps et en des endroits différents. De ce fait, il est possible de limiter les opérations de montage au sein de la cuve de stockage, notamment en solidarisant le dispositif de guidage à la tour de chargement et/ou de déchargement préalablement à sa mise en place dans la cuve de stockage, ce qui permet de résoudre les problématiques d'encombrement résultant des opérations de montage dans la cuve de stockage. La limitation des opérations réalisées dans la cuve de stockage permet en outre de réduire les risques d'endommagement de cette cuve de stockage lors de manipulations de matériaux.

En outre, l'assemblage du dispositif de tampon et du tampon lui-même en deux temps permet d'assembler à la tour de chargement et/ou de déchargement d'autres composants, notamment des supports de pompe et des pompes, avant sa descente au sein de la cuve de stockage.

Selon une caractéristique optionnelle de l'invention, le support comprend une base, et le rebord comprend un premier bord, un deuxième bord et un troisième bord délimitant la zone de réception, le deuxième bord étant disposé entre le premier bord et le troisième bord en formant un « U », l'organe de maintien étant destiné à être solidarisé à la base du support à l'opposé du deuxième bord.

Le support comprend une base qui forme un fond du support et participe à délimiter la zone de réception du tampon. Cette base du support est bordée par le rebord, qui forme une saillie par rapport à la base. Le rebord est divisé en trois portions à savoir un premier bord, un deuxième bord et un troisième bord. Ces trois bords sont chacun disposé le long d'une extrémité différente du support, de sorte à former un « U ». La zone de réception est délimitée par les pattes du « U » ainsi que par l'organe de maintien qui est disposé entre ces pattes du « U ». Une fois solidarisé à la base du support, l'organe de maintien joint le premier bord et le troisième bord, constituant ainsi un quatrième bord du dispositif de guidage.

Selon une caractéristique optionnelle de l'invention, le premier bord et le troisième bord sont respectivement disposés à des extrémités longitudinales du support, le deuxième bord et l'organe de maintien étant respectivement disposés à des extrémités verticales du support.

Les extrémités longitudinales du support correspondent ici à ses extrémités qui s'étendent parallèlement à la direction longitudinale qui est la direction d'extension principale du support, les extrémités verticales étant celles qui relient deux à deux les extrémités longitudinales. Le support est de forme générale quadrilatère, de préférence rectangulaire, de sorte à être plus facilement adapté à la réception du tampon qui est également de forme générale rectangulaire. Une fois le dispositif de guidage positionné dans la cuve de stockage, les extrémités longitudinales sont celles qui sont sensiblement parallèles à la paroi de fond de cette cuve de stockage, les extrémités verticales lui étant sensiblement perpendiculaires. La disposition du deuxième bord et de l'organe de maintien aux extrémités verticales correspond à un premier mode de réalisation du dispositif de guidage selon l'invention. Dans ce premier mode de réalisation, le tampon est inséré au sein de la zone de réception du dispositif de guidage par des côtés du dispositif de guidage.

Selon une caractéristique optionnelle de l'invention, le dispositif de guidage comprend un système de fixation, de préférence amovible, solidarisant l'organe de maintien au support.

Le système de fixation amovible est par exemple un système de vissage. Il permet de solidariser l'organe de maintien au support, plus particulièrement à la base du support, des vis traversant alors la base jusqu'à venir en prise dans l'organe de maintien.

Selon une caractéristique optionnelle de l'invention, l'organe de maintien et le support sont solidarisés par soudage.

Le soudage est un soudage TIG (tungsten inert gas). Le soudage permet de former entre l'organe de maintien et le support un ensemble monobloc.

Selon une caractéristique optionnelle de l'invention, l'un des bords du support présente un chanfrein, ledit bord étant destiné à être le bord le plus proche de la paroi de fond et s'étendant parallèlement à ladite paroi de fond.

Selon une caractéristique optionnelle de l'invention, le support comprend une première face comportant la zone de réception et une deuxième face opposée à la première face, le dispositif de guidage comprenant une première plaque et une deuxième plaque s'étendant à partir de la deuxième face, la première plaque et la deuxième plaque étant configurées pour être solidarisées de part et d'autre d'une portion de la tour de chargement et/ou de déchargement.

La deuxième face est destinée à être positionnée en regard de la tour de chargement et/ou de déchargement. Cette deuxième face est porteuse de deux plaques qui s'étendent de façon sensiblement perpendiculaire à elle. Lorsque le dispositif de guidage est positionné sur la tour de chargement et/ou de déchargement, la première plaque et la deuxième plaque entourent une portion de cette tour de chargement et/ou de déchargement ; en d'autres termes, ladite portion est disposée entre la première plaque et la deuxième plaque.

L'invention concerne en outre une tour de chargement et/ou de déchargement configurée pour le chargement et/ou le déchargement de fluide cryogénique dans une cuve de stockage, comprenant au moins un dispositif de guidage tel qu'évoqué précédemment, une pluralité de mâts, et une embase reliant les mâts entre eux, le dispositif de guidage étant solidaire de l'embase et configuré pour venir au contact de la base solidaire de la paroi de fond de la cuve de stockage.

Au sein de la tour de chargement et/ou de déchargement, l'embase correspond à une armature qui permet de relier les mâts les uns aux autres. L'embase est solidaire du dispositif de guidage ; elle est plus précisément soudée à celui-ci. La tour de chargement et/ou de déchargement comprend au moins un dispositif de guidage. De préférence, la tour de chargement et/ou de déchargement comprend une pluralité de dispositifs de guidage répartis autour de la base.

Selon une caractéristique optionnelle de l'invention, le dispositif de guidage comprend un tampon configuré pour venir au contact de la base et autorisant un déplacement de la tour de chargement et/ou de déchargement le long de son axe d'extension, le dispositif de guidage bloquant au moins en partie la tour de chargement et/ou de déchargement dans un plan sensiblement parallèle à la paroi de fond.

Ce tampon, ou patin, est un élément de protection qui permet d'amortir d'éventuels chocs lors du déplacement de la deuxième portion vers la base. Le tampon est configuré pour autoriser un déplacement de la tour de chargement et/ou de déchargement selon la direction verticale mais pour empêcher au moins un déplacement de cette tour de chargement et/ou de déchargement selon la direction horizontale. Ainsi, le déplacement de la tour de chargement et/ou de déchargement est bloqué selon au moins un sens d'une direction perpendiculaire au tampon.

Le support et l'organe de maintien sont réalisés en acier inoxydable. Le tampon est réalisé en polytétrafluoroéthylène ou PTFE.

L'insertion du tampon par l'ouverture ménagée au sein du rebord permet de faciliter un éventuel remplacement de ce tampon.

Selon une caractéristique optionnelle de l'invention, les mâts s'étendent principalement selon une direction verticale, l'embase s'étend principalement dans un plan longitudinal-transversal et le support s'étend principalement selon une direction longitudinale, le deuxième bord et l'organe de maintien étant respectivement disposés à des extrémités longitudinales du support, le premier bord et le troisième bord étant respectivement disposés à des extrémités verticales du support.

La disposition du deuxième bord et de l'organe de maintien aux extrémités longitudinales correspond à un deuxième mode de réalisation du dispositif de guidage. Dans ce deuxième mode de réalisation, il est par exemple possible d'insérer le tampon au sein de la zone de réception du dispositif de guidage par le dessous du dispositif de guidage, qui est accessible au sein de la cuve de stockage.

Le chanfrein évoqué précédemment est plus particulièrement ménagé sur le bord disposé à une extrémité longitudinale qui est le plus proche de la paroi de fond de la cuve une fois la tour de chargement et/ou de déchargement associée à la base qui est solidaire de cette paroi de fond. Le chanfrein a pour fonction de faciliter une installation de la tour de chargement et/ou de déchargement au contact de la base.

L'invention est également relative à une cuve de stockage de fluide cryogénique, comprenant une tour de chargement et/ou de déchargement selon l'invention, la base et la paroi de fond dont est solidaire la base, le dispositif de guidage étant configuré pour guider un positionnement de la tour de chargement et/ou de déchargement sur la base.

Plus particulièrement, le dispositif de guidage est configuré pour bloquer la tour de chargement et/ou de déchargement dans un plan sensiblement parallèle à la paroi de fond tout en autorisant une translation de la tour de chargement et/ou de déchargement selon une direction sensiblement perpendiculaire à la paroi de fond. En d'autres termes, au sein de la cuve de stockage un mouvement de la tour de chargement et/ou de déchargement selon la direction verticale est autorisé mais un mouvement selon la direction horizontale est bloqué par le dispositif de guidage. La cuve de stockage est par exemple la cuve d'un ouvrage flottant, cette cuve de stockage étant étanche et isolée thermiquement.

Par ailleurs, l'invention entend couvrir un procédé d'installation d'une tour de chargement et/ou de déchargement telle qu'évoquée précédemment, comprenant une étape d'insertion du tampon au sein de la zone de réception du support, puis une étape de positionnement de l'organe de maintien dans l'ouverture, et au moins une étape de solidarisation de l'organe de maintien au support.

Lors du procédé d'installation de la tour de chargement et/ou de déchargement, l'organe de maintien est placé contre la base du support puis il lui est solidarisé. Le tampon est plus particulièrement inséré dans la zone de réception par l'ouverture présente au sein du rebord, avant que celle-ci ne soit obstruée par l'organe de maintien.

Selon une caractéristique optionnelle de l'invention, le procédé d'installation d'une tour de chargement et/ou de déchargement comprend une étape de calibration préalablement à l'étape d'insertion, au cours de laquelle une pièce calibrée est insérée au sein de la zone de réception du support en vue d'effectuer des mesures d'écartement entre le support et la base, puis la pièce calibrée est retirée de la zone de réception, et une étape d'usinage du tampon en fonction des mesures d'écartement recueillies lors de l'étape de calibration.

La pièce calibrée est par exemple un tampon métallique calibré, qui permet à l'aide de jauges d'épaisseur de mesurer des écartements aux quatre coins de ce tampon métallique calibré. L'étape de calibration a pour but de déterminer les mesures d'écartement qui seront utilisées pour usiner le tampon définitif de sorte que celui-ci soit à une distance prédéterminée de la base. Cela permet de s'assurer que le tampon est le plus proche possible de la base, ce tampon étant ajusté sur mesure.

Selon une caractéristique optionnelle de l'invention, l'au moins une étape de solidarisation de l'organe de maintien au support comprend une première étape de solidarisation par le système de fixation amovible et une deuxième étape de solidarisation par soudage.

Le soudage est utilisé en complément du système de fixation amovible ; il intervient par exemple en recouvrement des vis de sorte à sécuriser leur positionnement. Le soudage est également utilisé directement entre l'organe de maintien et la base du support.

L'invention concerne de plus un procédé d'assemblage d'une cuve de stockage destinée à recevoir une tour de chargement et/ou de déchargement telle qu'évoquée précédemment, comprenant une étape d'association du support du dispositif de guidage à la tour de chargement et/ou de déchargement, une étape de descente de la tour de chargement et/ou de déchargement jusqu'à venir au contact de la base, et une étape d'installation de la tour de chargement et/ou de déchargement selon le procédé d'installation évoqué précédemment.

Le procédé d'assemblage selon l'invention permet l'installation de la tour de chargement et/ou de déchargement au sein de la cuve de stockage en vue du chargement ou du déchargement de fluide cryogénique. Dans un premier temps, le dispositif de guidage est associé à la tour de chargement et/ou de déchargement, puis celle-ci est descendue au sein de la cuve de stockage. Le tampon est ensuite inséré au sein de la zone de réception puis l'ouverture est close par l'organe de maintien. Une fois le tampon au contact de la base, le dispositif de guidage bloque une translation horizontale de la tour de chargement et/ou de déchargement tout en autorisant sa translation verticale.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig. 1] illustre, schématiquement, une cuve de stockage d'un fluide cryogénique, comprenant une tour de chargement et/ou de déchargement du fluide cryogénique, la tour de chargement et/ou de déchargement présentant une embase qui repose sur une base de la cuve ;
[Fig. 2] illustre, schématiquement, une pluralité de dispositifs de guidage disposés entre l'embase et la base de la figure 1 selon une vue de face, un sens d'insertion de tampons au sein des dispositifs de guidage étant représenté par des flèches ;
[Fig. 3] illustre, schématiquement, la pluralité de dispositifs de guidage disposés entre l'embase et la base de la figure 2 selon une vue de dessus, un sens d'insertion de tampons au sein des dispositifs de guidage étant représenté par des flèches ;
[Fig. 4] illustre, schématiquement, l'un des dispositifs de guidage des figures 2 et 3 selon une vue en perspective.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieure.

Sur les figures, les éléments communs à plusieurs figures conservent la même référence.

Dans la description détaillée qui va suivre, les dénominations « longitudinale », « transversale » et « verticale » se réfèrent à l'orientation d'un dispositif de guidage on selon l'invention. Une direction longitudinale correspond à une direction d'extension principale d'un support du dispositif de guidage, cette direction longitudinale étant parallèle à un axe longitudinal L d'un repère L, V, T illustré sur les figures. Une direction verticale correspond à une direction sensiblement perpendiculaire à un fond d'une cuve de stockage au sein de laquelle se trouve le dispositif de guidage, cette direction verticale étant parallèle à un axe vertical V du repère L, V, T et cet axe vertical V étant perpendiculaire à l'axe longitudinal L. Enfin, une direction transversale correspond à une direction parallèle à un axe transversal T du repère L, V, T, cet axe transversal T étant perpendiculaire à l'axe longitudinal L et à l'axe vertical V.

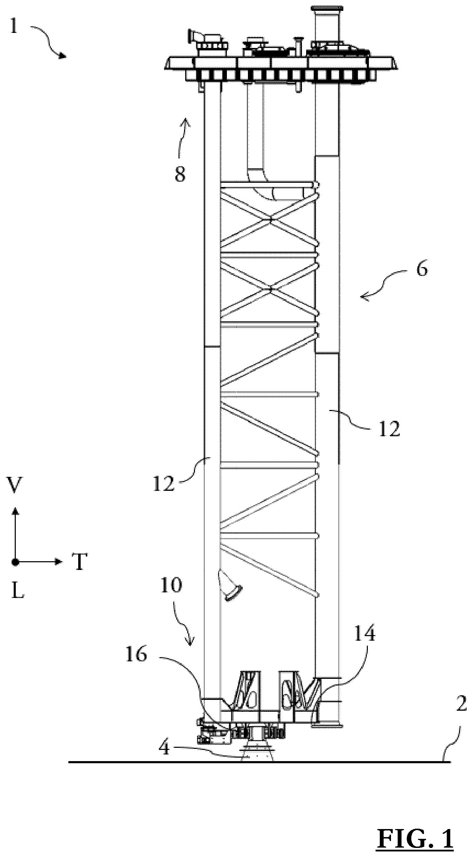

La figure 1 illustre ainsi, schématiquement, une cuve de stockage 1 d'un fluide cryogénique, par exemple du gaz naturel liquéfié. On pourra envisager, sans sortir du cadre de l'invention, que le fluide cryogénique est alternativement du gaz de pétrole liquéfié, du méthane, de l'éthane, de l'ammoniaque, de l'azote (diazote) du dioxyde de carbone ou encore de l'hydrogène (dihydrogène). La cuve de stockage 1 est la cuve d'un ouvrage flottant, par exemple un navire destiné au traitement de gaz liquéfié tel qu'un méthanier, ou encore d'une installation terrestre ou d'une plateforme gravitaire. La cuve de stockage 1 comprend une paroi de fond 2 qui correspond à son plancher. La cuve de stockage 1 comprend en outre des parois latérales, qui avec la paroi de fond 2 participent à délimiter un volume de stockage du gaz naturel liquéfié. Les parois de la cuve de stockage 1 sont pourvues d'au moins une couche d'isolation thermique recouverte par une membrane d'étanchéité, qui est destinée à être au contact du gaz naturel liquéfié.

Sur la paroi de fond 2 de la cuve de stockage 1 est disposée une base 4 de forme conique. Cette base 4 fait saillie de la paroi de fond 2 selon une direction verticale V sensiblement perpendiculaire à la paroi de fond 2. La base 4 constitue un socle destiné à recevoir d'autres éléments de la cuve de stockage 1.

Au titre des éléments supportés par la base 4, la cuve de stockage 1 comprend au moins une tour de chargement et/ou de déchargement 6 configurée pour le chargement et/ou le déchargement du gaz naturel liquéfié dans la cuve de stockage 1. En d'autres termes, la tour de chargement et/ou de déchargement 6 permet l'acheminement et/ou l'évacuation de gaz naturel liquéfié vers la cuve de stockage 1 ou depuis celle-ci. La tour de chargement et/ou de déchargement 6 s'étend entre une paroi de plafond de la cuve de stockage et sa paroi de fond 2, plus précisément la base 4. La tour de chargement et/ou de déchargement 6 est par exemple installée au sein du volume de la cuve de stockage 1 à travers un couvercle de cette cuve de stockage 1 équipant sa paroi de plafond.

La tour de chargement et/ou de déchargement 6 s'étend selon une direction d'extension principale qui est sensiblement parallèle à la direction verticale V, c'est-à-dire sensiblement perpendiculaire à la paroi de fond 2. La tour de chargement et/ou de déchargement 6 s'étend entre une première extrémité 8 disposée en regard de la paroi de plafond de la cuve de stockage 1 et une deuxième extrémité 10 disposée en regard de la paroi de fond 2. Plus spécifiquement, la première extrémité 8 est en regard du couvercle tandis que la deuxième extrémité 10 est au contact de la base 4.

La tour de chargement et/ou de déchargement 6 comprend une pluralité de mâts 12 s'étendant principalement selon la direction verticale V. La tour de chargement et/ou de déchargement 6 comprend ici trois mâts 12 qui forment un tripode, seulement deux de ces trois mâts 12 étant visibles à la figure 1. Ces trois mâts 12 sont solidarisés au niveau de la deuxième extrémité 10 de la tour de chargement et/ou de déchargement 6 par une embase 14, qui est une plaque sensiblement parallèle à la paroi de fond 2 reliant les mâts 12 les uns aux autres et qui s'étend donc principalement dans un plan longitudinal-transversal.

L'embase 14 correspond à la partie de la tour de chargement et/ou de déchargement 6 qui est positionnée en regard de la base 4. Du fait de cette disposition de l'embase 14 par rapport à la base 4, la tour de chargement et/ou de déchargement 6 est maintenue en position à la verticale au sein de la cuve de stockage 1, notamment lorsque cette tour de chargement et/ou de déchargement 6 est au moins partiellement immergée dans le gaz naturel liquéfié.

Au cours de l'installation de la tour de chargement et/ou de déchargement 6 au sein du volume de la cuve de stockage 1, l'embase 14 est positionnée par rapport à la base 4 grâce à au moins un dispositif de guidage 16, ce dispositif de guidage 16 ayant plus particulièrement pour fonction de permettre une translation verticale de la tour de chargement et/ou de déchargement 6 par rapport à la base 4 tout en empêchant un déplacement dans un plan sensiblement parallèle à la paroi de fond 2.

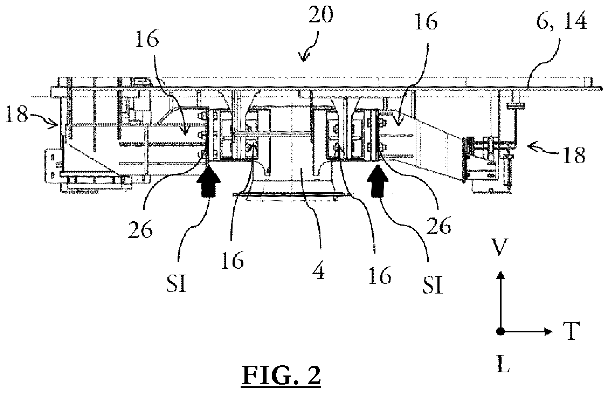

Le dispositif de guidage 16 va maintenant être décrit en relation avec les figures 2 à 4. La cuve de stockage 1 comprend ici plusieurs dispositifs de guidage 16, qui sont disposés autour de la base 4. La cuve de stockage 1 comprend plus précisément six dispositifs de guidage 16, avec deux dispositifs de guidage 16 disposés le long de bords d'extrémité 18 de l'embase 14 et quatre dispositifs de guidage 16 disposés le long de bords de côté 20 de cette embase 14. Il y a ainsi deux dispositifs de guidage 16 le long d'un premier bord de côté 20 de l'embase 14 et deux dispositifs de guidage 16 le long d'un deuxième bord de côté 20 de celle-ci, le premier bord de côté 20 et le deuxième bord de côté 20 correspondant aux plus grands côtés de l'embase 14 et joignant les deux bords d'extrémité 18. Sauf mention contraire, les caractéristiques décrites en relation avec l'un de ces dispositifs de guidage 16 ont vocation à s'appliquer, *mutatis mutandis,* à l'intégralité des dispositifs de guidage 16.

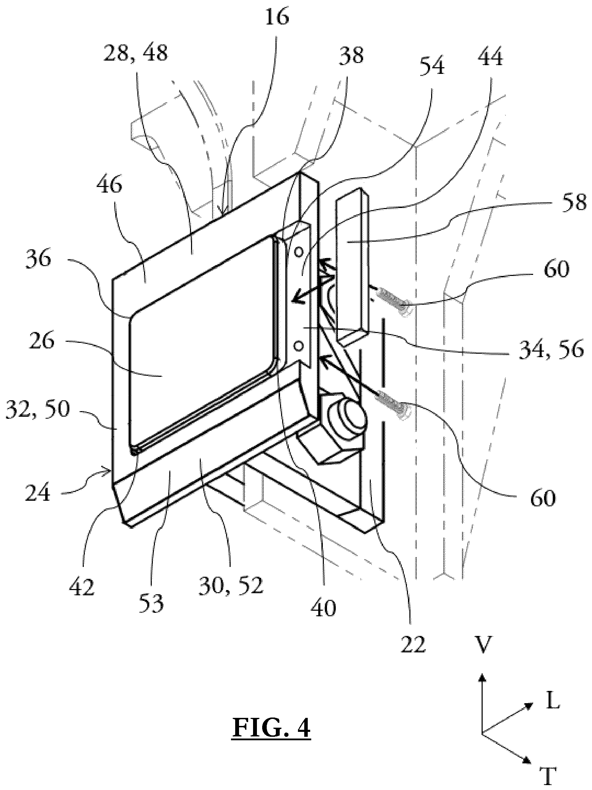

Tel que cela est particulièrement visible à la figure 4, le dispositif de guidage 16 présente un corps principal 22 qui est solidaire de l'embase 14. Le corps principal 22 est par exemple soudé à l'embase 14, contre une de ses faces qui est en regard de la paroi de fond 2 de la cuve de stockage 1 lorsque la tour de chargement et/ou de déchargement 6 est installée au sein de cette cuve de stockage 1.

Le corps principal 22 du dispositif de guidage 16 comprend un support 24, qui est destiné à être disposé en regard de la base 4. Ce support 24 constitue un socle pour un tampon 26 du dispositif de guidage 16, ce tampon 26 étant un dispositif de protection destiné à venir au contact de la base 4. Ce tampon 26 est configuré pour autoriser un déplacement de la tour de chargement et/ou de déchargement 6 selon la direction verticale V mais pour empêcher un déplacement de cette tour de chargement et/ou de déchargement 6 selon des directions parallèles à la paroi de fond 2, c'est-à-dire un déplacement dans un plan longitudinal-transversal. Le tampon 26 est réalisé en polytétrafluoroéthylène ou PTFE, tandis que le corps principal 22 du dispositif de guidage 16 et notamment son support 24 sont en acier inoxydable.

Le support 24 présente une forme sensiblement rectangulaire. Il s'étend principalement selon une direction longitudinale L sensiblement parallèle à la paroi de fond 2. Le support 24 s'étend entre une première extrémité longitudinale 28 et une deuxième extrémité longitudinale 30, qui sont toutes deux parallèles à la direction longitudinale L. La deuxième extrémité longitudinale 30 est plus proche de la paroi de fond 2 de la cuve de stockage 1 que la première extrémité longitudinale 28. La première extrémité longitudinale 28 et la deuxième extrémité longitudinale 30 sont reliées deux à deux par des extrémités verticales 32, 34 du support 24, parmi lesquelles une première extrémité verticale 32 et une deuxième extrémité verticale 34. Du fait de la forme sensiblement rectangulaire du support 24, la première extrémité longitudinale 28 et la première extrémité verticale 32 se rejoignent en formant un premier coin 36 du support 24, cette première extrémité longitudinale 28 et la deuxième extrémité verticale 34 se rejoignent en formant un deuxième coin 38, cette deuxième extrémité verticale 34 et la deuxième extrémité longitudinale 30 se rejoignent en formant un troisième coin 40, et cette deuxième extrémité longitudinale 30 et la première extrémité verticale 32 se rejoignent en formant un quatrième coin 42.

Le support 24 comprend une base 44 sensiblement plate sur laquelle est disposé un rebord 46 du support 24. Ce support 24 fait constitue ainsi une saillie par rapport à un plan dans lequel s'étend principalement la base 44. Le rebord 46 comprend un premier bord 48, un deuxième bord 50 et un troisième bord 52 qui correspondent à des portions droites du rebord 46. Les bords 48, 50, 52 sont disposés les uns par rapport aux autres de sorte à former un « U », le deuxième bord 50 étant à cet effet disposé entre le premier bord 48 et le troisième bord 52 de façon sensiblement perpendiculaire à ceux-ci.

Dans le mode de réalisation représenté à la figure 4, qui correspond à un premier mode de réalisation, le premier bord 48 et le troisième bord 52 sont respectivement disposés le long de la première extrémité longitudinale 28 et de la deuxième extrémité longitudinale 30, le deuxième bord 50 étant quant à lui disposé le long de la première extrémité verticale 32. À l'inverse, dans un deuxième mode de réalisation non illustré sur les figures, le premier bord 48 et le troisième bord 52 sont respectivement disposés le long de la première extrémité verticale 32 et de la deuxième extrémité verticale 34, tandis que le deuxième bord 50 est disposé le long de la première extrémité longitudinale 28. Tel que cela sera expliqué par la suite, le premier mode de réalisation correspond à un dispositif de guidage 16 disposé le long d'un bord de côté 20 de l'embase 14, le deuxième mode de réalisation correspondant à un dispositif de guidage 16 disposé le long d'un bord d'extrémité 18 de cette embase 14. Quel que soit le mode de réalisation, on comprend que le rebord 46 s'étend le long de trois des quatre extrémités 28, 30, 32, 34 du support 24.

Comme cela est visible à la figure 4, c'est-à-dire pour le dispositif de guidage 16 positionné le long d'un bord de côté 20 de l'embase 14, le bord disposé le long de la deuxième extrémité longitudinale 30 qui est la plus proche de la paroi de fond 2, à savoir le troisième bord 52, présente un chanfrein 53. Ce chanfrein 53 est configuré pour faciliter la descente de la tour de chargement et/ou de déchargement 6 au sein de la cuve de stockage 1, et plus particulièrement sa descente au contact de la base 4 solidaire de la paroi de fond 2 de la cuve de stockage 1. Bien que non illustré ici, le dispositif de guidage 16 selon le deuxième mode de réalisation, en d'autres termes le dispositif de guidage 16 positionné le long d'un bord d'extrémité 18 de l'embase 14, présente également un chanfrein 53 sur sa deuxième extrémité longitudinale 30, qui est son extrémité dépourvue de rebord 46.

Le rebord 46 participe à délimiter, conjointement avec la base 44, une zone de réception 54 du tampon 26. En d'autres termes, le tampon 26 est destiné à être logé au sein de cette zone de réception 54 lorsqu'il est associé au support 24. À cet effet, le rebord 46 présente une ouverture 56 entre le premier bord 48 et le deuxième bord 52, à l'opposé du deuxième bord 50 selon la direction longitudinale L. Cette ouverture 56 correspond ainsi à une portion du support 24 dépourvue de rebord 46. L'ouverture 56 est disposée le long de la deuxième extrémité verticale 34 dans le premier mode de réalisation, et le long de la deuxième extrémité longitudinale 30 dans le deuxième mode de réalisation.

Lors de l'association du tampon 26 au support 24, le tampon 26 est plus particulièrement glissé au sein de la zone de réception 54 à travers l'ouverture 56. Le tampon 26 est alors en butée contre à la fois le premier bord 48, le deuxième bord 50 et le troisième bord 52 qui entourent la zone de réception 54.

Afin de sécuriser la position du tampon 26 au sein de la zone de réception 54, le dispositif de guidage 16 comprend un organe de maintien 58. Cet organe de maintien 58 est positionné au sein de l'ouverture 56, c'est-à-dire entre le premier bord 48 et le troisième bord 52, sensiblement parallèlement au deuxième bord 50 et à l'opposé de celui-ci selon la direction longitudinale L. Selon le premier mode de réalisation illustré en figure 4, l'organe de maintien 58 est ainsi disposé le long de la deuxième extrémité verticale 34 du support 24. Au contraire, dans le deuxième mode de réalisation cet organe de maintien 58 est disposé le long de la deuxième extrémité longitudinale 30 du support 24. On comprend que l'organe de maintien 58 est positionné dans l'ouverture 56 une fois le tampon 26 inséré dans la zone de réception 54, de sorte à fermer cette zone de réception 54.

L'organe de maintien 58 est solidarisé au support 24 ; plus particulièrement, l'organe de maintien 58 est rendu solidaire de la base 44 du support 24. Une telle solidarisation intervient par le biais d'un système de fixation amovible 60. Tel qu'il est illustré à la figure 4, ce système de fixation amovible 60 comprend des vis qui traversent des orifices ménagés à cet effet dans la base 44 en regard de l'ouverture 56 et de l'organe de maintien 58. Lors de la mise en oeuvre du système de fixation amovible 60, les vis sont insérées dans les orifices depuis une face de la base 44 en regard du corps principal 22 du dispositif de guidage 16 jusqu'à une face destinée à être en regard de la base 4, jusqu'à ce que ces vis viennent en prise dans l'organe de maintien 58 qui est positionné contre la base 44 entre le premier bord 48 et le troisième bord 52.

Afin de s'assurer d'une tenue dans le temps du système de fixation amovible, l'organe de maintien 58 est en outre solidarisé au support 24 par l'intermédiaire d'un système de fixation définitif, notamment par soudage. Ce soudage intervient en recouvrement des vis d'une part, et éventuellement entre l'organe de maintien 58 et le support 24 d'autre part. Le soudage est par exemple un soudage à l'arc avec une électrode en tungstène.

Un procédé d'assemblage de la cuve de stockage 1, qui comprend lui-même un procédé d'installation de la tour de chargement et/ou de déchargement 6, va maintenant être décrit. Au cours du procédé d'assemblage de la cuve de stockage 1, la tour de chargement et/ou de déchargement 6 est positionnée au sein du volume de la cuve de stockage 1, en vue du chargement et/ou du déchargement de gaz naturel liquéfié au sein de la cuve de stockage 1.

Le procédé d'assemblage de la cuve de stockage 1 débute par une étape d'association du corps principal 22 du dispositif de guidage 16 à la tour de chargement et/ou de déchargement 6. Plus particulièrement, le corps principal 22 du dispositif de guidage 16, qui porte le support 24, est soudé à l'embase 14 de la tour de chargement et/ou de déchargement 6. À ce stade du procédé d'assemblage, le dispositif de guidage 16 est dépourvu du tampon 26 et de l'organe de maintien 58.

Une fois le corps principal 22 associé à la tour de chargement et/ou de déchargement 6, le procédé d'assemblage comprend une étape de descente des mâts 12 de la tour de chargement et/ou de déchargement 6, qui sont associés les uns aux autres par l'intermédiaire de l'embase 14, depuis le couvercle de la cuve de stockage 1 vers la base 4 solidaire de la paroi de fond 2. L'étape de descente de la tour de chargement et/ou de déchargement 6 est facilitée par la présence du chanfrein sur la deuxième extrémité longitudinale 30 du support 24.

Une fois l'embase 14 en regard de la base 4, le procédé d'assemblage de la cuve de stockage 1 se poursuit par une étape d'installation de la tour de chargement et/ou de déchargement 6.

L'installation de la tour de chargement et/ou de déchargement 6 comprend tout d'abord une étape de calibration. Au cours de cette étape de calibration, une pièce calibrée de forme sensiblement rectangulaire est insérée au sein de la zone de réception 54 du support 24 *via* l'ouverture 56. Des mesures d'écartement sont ensuite réalisées aux quatre coins 36, 38, 40, 42 du support 24 grâce à des jauges d'épaisseur, puis la pièce calibrée est retirée de la zone de réception 54. L'installation de la tour de chargement et/ou de déchargement 6 comprend ensuite une étape d'usinage du tampon 26, ce tampon 26 étant usiné en fonction des mesures d'écartement recueillies au cours de l'étape de calibration ; plus précisément, le tampon 26 est usiné de sorte à être disposé, une fois inséré dans le support 24, à une distance de la base 4 qui est inférieure à un demi-millimètre.

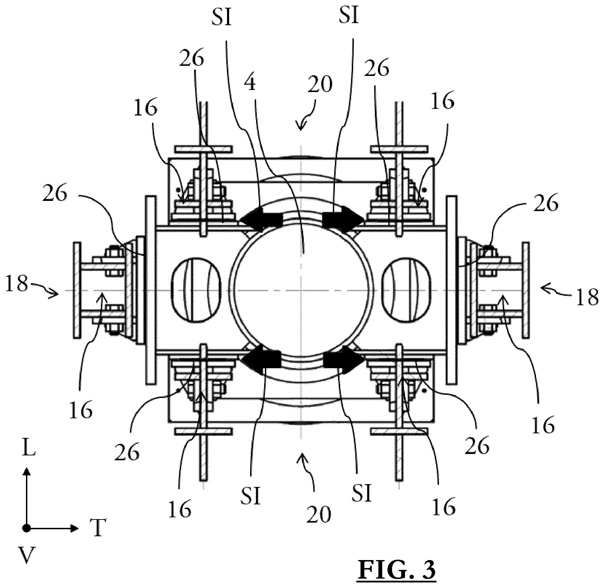

L'étape d'usinage du tampon 26 est par exemple réalisée en dehors de la cuve de stockage 1, le tampon 26 usiné étant par la suite descendu au sein de la cuve de stockage 1 en vue d'une étape d'insertion dans le support 24. Lors de cette étape d'insertion, le tampon 24 est coulissé au sein de la zone de réception 54 à travers l'ouverture 56. Pour le dispositif de guidage 16 selon le premier mode de réalisation, le tampon 26 est inséré par la deuxième extrémité verticale 34 du support 24, tandis que pour le dispositif de guidage 16 selon le deuxième mode de réalisation ce tampon 16 est inséré par la deuxième extrémité longitudinale 30. Des sens d'insertion des tampons 26 sont illustrés sur les figures par des flèches SI, le premier mode de réalisation étant illustré aux figures 3 et 4 et le deuxième mode de réalisation étant représenté à la figure 2.

L'installation de la tour de chargement et/ou de déchargement 6 se poursuit par une étape de positionnement de l'organe de maintien 58 au sein de l'ouverture 56, entre le premier bord 48 et le troisième bord 52. Au cours d'une étape de solidarisation, cet organe de maintien 58 est solidarisé à la base 44 du support 24 tout d'abord par l'intermédiaire du système de fixation amovible 60, puis par le biais du soudage qui intervient en complément du système de fixation amovible 60. Le dispositif de guidage 16, au sein duquel le tampon 26 est maintenu en position par l'organe de maintien 58, est alors apte à bloquer une translation horizontale de la tour de chargement et/ou de déchargement 6 tout en autorisant sa translation verticale.

La présente invention propose ainsi un dispositif de de guidage dont un organe de maintien est solidarisé à un support du dispositif de guidage de sorte à maintenir en position un tampon permettant d'ajuster un positionnement d'une tour de chargement et/ou de déchargement de gaz naturel liquéfié.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

## Revendications

1. Tour de chargement et/ou de déchargement (6) configurée pour le chargement et/ou le déchargement de fluide cryogénique dans une cuve de stockage (1), comprenant au moins un dispositif de guidage (16) destiné à permettre le positionnement de la tour de chargement et/ou de déchargement (6) de fluide cryogénique par rapport à une base (4) solidaire d'une paroi de fond (2) de la cuve de stockage (1) de fluide cryogénique, le dispositif de guidage (16) comprenant un support (24), configuré pour être solidaire de la tour de chargement et/ou de déchargement (6), comportant un rebord (46) et une zone de réception (54) d'un tampon (26), le rebord (46) présentant une ouverture (56) configurée pour insérer le tampon (26) dans la zone de réception (54), le dispositif de guidage (16) comprenant un organe de maintien (58) du tampon (26) délimitant avec le rebord (46) la zone de réception (54), l'organe de maintien (58) étant destiné à s'étendre au moins en partie dans l'ouverture (56), la tour de chargement et/ou de déchargement (6) comprenant une pluralité de mâts (12), et une embase (14) reliant les mâts (12) entre eux, le dispositif de guidage (16) étant solidaire de l'embase (14) et configuré pour venir au contact de la base (4) solidaire de la paroi de fond (2) de la cuve de stockage (1).

2. Tour de chargement et/ou de déchargement (6) selon la revendication 1, dans laquelle le support (24) comprend une base (44), et le rebord (46) comprend un premier bord (48), un deuxième bord (50) et un troisième bord (52) délimitant la zone de réception (54), le deuxième bord (50) étant disposé entre le premier bord (48) et le troisième bord (52) en formant un « U », l'organe de maintien (58) étant destiné à être solidarisé à la base (44) du support (24) à l'opposé du deuxième bord (50).

3. Tour de chargement et/ou de déchargement (6) selon la revendication 2, dans laquelle l'un des bords (48, 50, 52) du support (24) présente un chanfrein (53), ledit bord (48, 50, 52) étant destiné à être le bord (48, 50, 52) le plus proche de la paroi de fond (2) de la cuve et s'étendant parallèlement à ladite paroi de fond (2).

4. Tour de chargement et/ou de déchargement (6) selon la revendication 2 ou 3, dans laquelle le premier bord (48) et le troisième bord (52) sont respectivement disposés à des extrémités longitudinales (28, 30) du support (24), le deuxième bord (50) et l'organe de maintien (58) étant respectivement disposés à des extrémités verticales (32, 34) du support (24).

5. Tour de chargement et/ou de déchargement (6) selon l'une des revendications 1 à 4, dans laquelle le dispositif de guidage comprend un système de fixation (60), de préférence amovible, solidarisant l'organe de maintien (58) au support (24).

6. Tour de chargement et/ou de déchargement (6) selon l'une quelconque des revendications 1 à 5, dans laquelle le support (24) comprend une première face comportant la zone de réception (54) et une deuxième face opposée à la première face, le dispositif de guidage (16) comprenant une première plaque et une deuxième plaque s'étendant à partir de la deuxième face, la première plaque et la deuxième plaque étant configurées pour être solidarisées de part et d'autre d'une portion de la tour de chargement et/ou de déchargement (6).

7. Tour de chargement et/ou de déchargement (6) selon l'une quelconque des revendications 1 à 6, dans laquelle le dispositif de guidage comprend un tampon (26) configuré pour venir au contact de la base (4) et autorisant un déplacement de la tour de chargement et/ou de déchargement (6) le long de son axe d'extension, le dispositif de guidage (16) bloquant au moins en partie la tour de chargement et/ou de déchargement (6) dans un plan sensiblement parallèle à la paroi de fond (2).

8. Cuve de stockage (1) de fluide cryogénique, comprenant une tour de chargement et/ou de déchargement (6) selon l'une quelconque des revendications 1 à 7, la base (4) et la paroi de fond (2) dont est solidaire la base (4), le dispositif de guidage (16) étant configuré pour guider un positionnement de la tour de chargement et/ou de déchargement (6) sur la base (4).

9. Procédé d'installation d'une tour de chargement et/ou de déchargement (6) selon la revendication 7, comprenant une étape d'insertion du tampon (26) au sein de la zone de réception (54) du support (24), puis une étape de positionnement de l'organe de maintien (58) dans l'ouverture (56), et au moins une étape de solidarisation de l'organe de maintien (58) au support (24).

10. Procédé d'installation d'une tour de chargement et/ou de déchargement (6) selon la revendication 9, comprenant une étape de calibration préalablement à l'étape d'insertion, au cours de laquelle une pièce calibrée est insérée au sein de la zone de réception (54) du support (24) en vue d'effectuer des mesures d'écartement entre le support (24) et la base (4), puis la pièce calibrée est retirée de la zone de réception (54), et une étape d'usinage du tampon (26) en fonction des mesures d'écartement recueillies lors de l'étape de calibration.

11. Procédé d'installation d'une tour de chargement et/ou de déchargement (6) selon la revendication 9 ou 10 en combinaison avec la revendication 5, dans lequel l'au moins une étape de solidarisation de l'organe de maintien (58) au support (24) comprend une première étape de solidarisation par le système de fixation (60) de préférence amovible et une deuxième étape de solidarisation par soudage.

12. Procédé d'assemblage d'une cuve de stockage (1) destinée à recevoir une tour de chargement et/ou de déchargement (6) selon l'une quelconque des revendications 1 à 7, comprenant une étape d'association du support (24) du dispositif de guidage (16) à la tour de chargement et/ou de déchargement (6), une étape de descente de la tour de chargement et/ou de déchargement (6) jusqu'à venir au contact de la base (4), et une étape d'installation de la tour de chargement et/ou de déchargement (6) selon le procédé d'installation objet des revendications 9 à 11.
